# EUROPEAN PATENT APPLICATION

(11) **EP 2 234 014 A2**
(43) Date of publication of application: **29.09.2010**
(21) Application number: 09180573.9
(22) Date of filing: 23.12.2009
(51) Int. Cl.: G06F 9/445, G06F 3/12, G06F 13/10

(54) **Information processing apparatus, information processing method, and information processing system**

(30) Priority: 27.12.2008 JP 2008335544
(71) Applicant: CANON KABUSHIKI KAISHA, Ohta-ku Tokyo 146-8501 (JP)
(72) Inventor: Nagashima, Takeyuki, Ohta-ku Tokyo (JP)
(74) Representative: Williamson, Brian

(57) **Abstract**

The present invention provides an information processing method including steps of determining (S203) whether or not the print driver of a local printer is the same kind as the print driver of a network printer, and comparing the version of the print driver of the network printer with that of the printer of the local printer to determine (S204) which version is newer. When it is determined that the driver of the local printer s the same kind as the driver of the network printer and the print driver of the local printer is newer than the print driver of the network printer, the print driver of the local printer is transferred (S206) to the print server as the driver of the network printer.

## Description

### BACKGROUND OF THE INVENTION

### Field of the Invention

The present invention relates to an information processing apparatus and a driver installation method that install a network device driver into a control server.

### Description of the Related Art

Conventionally, a printing system provided with a network printer, a client, a print server, and an administration server for managing these has been proposed. In the conventional printing system, a shared printer is set to the print server, and the print driver of the network printer corresponding to the shared printer is installed on the client. In the conventional printing system, printing is performed via the print server. In another conventional printing system, the local printer is connected to the client to perform direct printing from a local printer without going through the print server.

Settings of the shared printer and network printer are made by print driver installation and setting for sharing to the print server and by installing the print driver corresponding to the shared printer to the client.

In a printing system using a local printer together, a print driver corresponding to the local printer is installed on a client. Here, the print driver includes attributes such as manufacturer, direction, PDL (e.g., page description language for forming a print job such as PCL, PostScript, or the like), and version. The version of the print driver is upgraded at any time in order to correspond with functional improvements and faults. Accompanying this version upgrade, the print driver needs to be reinstalled.

In the printing system for printing via the print server, the identity of the print driver needs to be maintained between the shared printer on the print server and the network printer on the client. Also, in the printing system provided with the local printer, the identity of the print driver of the local printer needs to be maintained with respect to the print drivers of the shared printer and the network printer.

The operating system developed by Microsoft (TM) performs version upgrade of the print driver used for the shared printer on the print server by using the Point and Print function. At this time, automatic version upgrades of the print driver used for the client network printer corresponding to the shared printer have been attempted (see "Windows Point and Print Technical Overview", Microsoft, Published: March 21, 2003, Update: Nov. 20, 2006).

According to the technique disclosed in "Windows Point and Print Technical Overview", the identity between the print driver of the shared printer on the print server and the client network printer corresponding to the shared printer is maintained. However, when a local printer is further connected to the client, the version of the shared printer on the print server may be different from that of the print driver of the local printer. In such a case, printing may be disabled from the client via the print server, or incorrect print results may be obtained.

As a result, the identity between the print driver of the shared printer on the print server and the print driver of the network printer may be lost, whereby printing may be disabled from the client by the utilization of the network printer, or incorrect print results may be obtained.

### SUMMARY OF THE INVENTION

The present invention provides an information processing apparatus that maintains the identity of the printer versions for a shared printer, a network printer, and a local printer when a print driver is updated.

The present invention in its first aspect provides an information processing apparatus as specified in claims 1 to 7.

The present invention in its second aspect provides a computer-readable recording medium as specified in claim 8.

The present invention in its third aspect provides an information processing method as specified in claims 9 to 15.

The present invention in its fourth aspect provides an information processing system as specified in claim 16.

Further features of the present invention will become apparent from the following description of exemplary embodiments with reference to the attached drawings.

### BRIEF DESCRIPTION OF THE DRAWINGS

Fig. 1 is a conceptual diagram of a system to which the information processing apparatus according to an embodiment of the present invention is applied.

Fig. 2 is a block diagram of a system to which the information processing apparatus according to an embodiment of the present invention is applied.

Fig. 3 is a conceptual diagram of a system to which the information processing apparatus according to an embodiment of the present invention is applied.

Fig. 4 is a conceptual diagram of a system to which the information processing apparatus according to an embodiment of the present invention is applied.

Fig. 5 is a view showing an information table of the print server according to an embodiment of the present invention.

Fig. 6 is a flow diagram of processing of the administration server according to an embodiment of the present invention.

Fig. 7 is a table of the operational mode according to an embodiment of the present invention.

Fig. 8 is a representative drawing of the operational mode according to an embodiment of the present invention.

Fig. 9 is a flow diagram of processing of the client according to an embodiment of the present invention.

Fig. 10 is a flow diagram of processing of the print server according to an embodiment of the present invention.

Fig. 11 is a flow diagram of processing of the print server according to an embodiment of the present invention.

Fig. 12 is a view showing an information table of the client network printer according to an embodiment of the present invention.

Fig. 13 is a conceptual diagram showing a premise when a local printer is connected to a network printer.

### DESCRIPTION OF THE EMBODIMENTS

(Technical Premise) Hereinafter, a premise of the present invention is shown. It is premised that a network printer and a local printer are the same model or are a model that are operated by the same print driver.

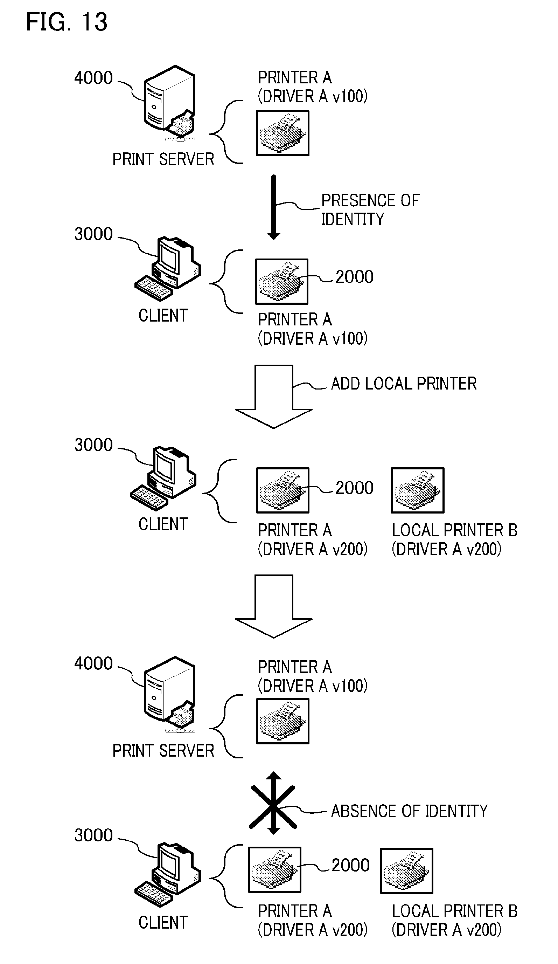

In Fig. 13, first, a shared printer A is set in a print server with a print driver A (v100). That is, the print driver A (v100) allows the print server to provide functions of the shared printer A. Next, the print driver A (v100), which is the same kind as the printer A, is installed on a client as the print driver of the network printer corresponding to the shared printer.

As a result, the driver version of both the shared printer and the network printer becomes (v100) and the identity therebetween is thereby maintained, resulting in no occurrence of problems. Also, in the case of a version upgrade by using the Point and Print function, both the shared printer and the network printer are updated to the same version, for example, (v200), and the identity therebetween is thereby maintained, resulting in no occurrence of problems.

However, a local printer B is connected to the client, and the print driver of the local printer B is updated from version (v100) to version (v200) in the client. At this time, the network printer A in the client is updated from version (v100) to version (v200). However, the shared printer for the print server is not updated but remains at version (v100).

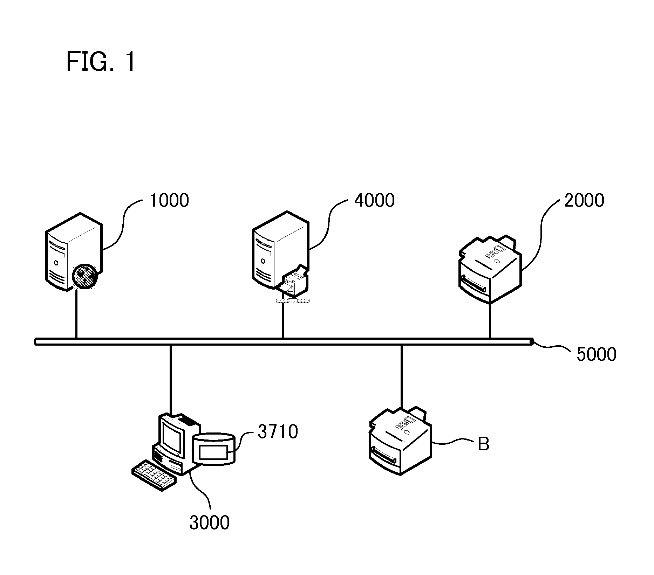

(General Configuration) Hereinafter, the information processing apparatus and the information processing method according to this embodiment will be described with reference to the drawings. Fig. 1 is an example of the information processing system according to this embodiment. The information processing system of this embodiment includes a network printer 2000, a client 3000, a print server (control server) 4000, and a administration server (information processing apparatus) 1000 for managing these.

The client 3000 prints from the network printer 2000 via the print server 4000 through a communication line 5000 consisting of a bi-directional serial interface such as a conventional LAN, IEEE1394, USB, and the like.

A print driver for setting a shared printer is installed on the print server 4000. A print driver that is the same kind and the same version as a shared printer is installed on the client 3000 so as to set the network printer 2000 corresponding to the shared printer.

The local printer B is connected to the client 3000 via a serial cable. When a printer used by a user is switched to the local printer B, the user can directly print from the local printer B without going through the print server 4000.

When printing is performed via a print server, the network printer 2000 for the client 3000 performs document settings for forming a print job, and the shared printer for the print server 4000 performs device settings and spooling.

As used herein, the term "document settings" means that sheet size, copies, method for feeding sheets, and the like for forming a print job are set individually for each printing. As used herein, the term "device settings" refers to settings to be uniquely determined by the network printer 2000, which include port settings and sheet-discharging options that can be used in the network printer 2000. In other words, document settings are the items to be set individually for each client, and device settings are the items to be set for clients in common. In addition, rendering processing for forming a print job may be performed by the print server 4000.

Thus, when printing is performed via the print server 4000, the print drivers of the client 3000 and the print server 4000 perform printing in pairs. When connected to the local printer B, the client 3000 performs all processing for printing, such as document settings, device settings, rendering processing, spool processing, port processing, and the like.

Communication between the administration server 1000 and the client 3000 and between the administration server 1000 and the print server 4000 is realized by installation of an agent service on the operating system of the client 3000 and the print server 4000.

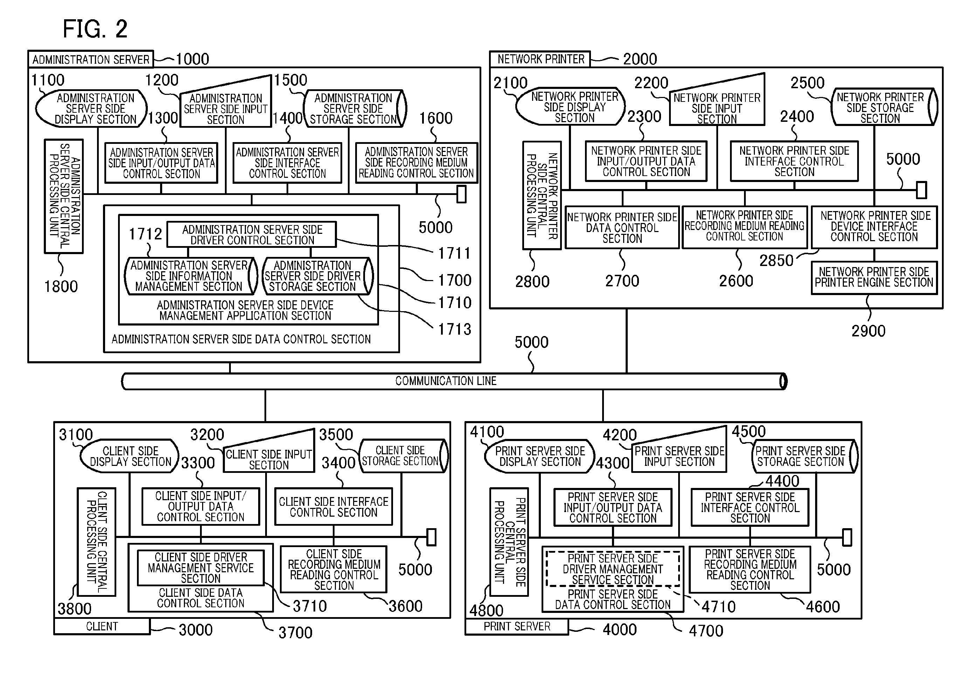

(Administration Server) Hereinafter, each section of an exemplary information processing system of the present invention will be described in detail with reference to Fig. 2.

The administration server 1000 includes an administration server side central processing unit 1800 that executes various processing operations. The administration server 1000 searches for a network printer managed mainly by an IT administrator, and monitors whether or not the network printer that has been found is in normal operation. The administration server 1000 sets MIB (Management Information Base) information and the like maintained by a network printer B in a comprehensive manner. The administration server 1000 directs installation or uninstallation processing for an appropriate print driver corresponding to the network printer 2000 with respect to a print server or a plurality of clients 3000.

The administration server side data control section 1700 is NVRAM and the like, and reads a system program, application program, and relevant data from an administration server side recording medium reading control section 1600 for loading.

The administration server side storage section 1500 stores data to be used by a program on the administration server side data control section 1700. The administration server side storage section 1500 consists of a recording medium such as a memory, a HDD (hard disk), and an optical magnetic disk, or consists of a device combined with these units. The system program and the application program processes information that has been input from the user interface (not shown) on an administration server side display section 1100. In addition, the system program and the application program perform input and output of data via an administration server side interface control section 1400.

To the administration server 1000, a CRT display or a liquid crystal display is connected as the administration server side display section 1100, and a pointing device such as keyboard, mouse, and the like is connected as an administration server side input section 1200.
An administration server side device management application section 1710 operates on the administration server side data control section 1700 such as NVRAM or the like. The administration server side device management application section 1710 includes an administration server side driver control section 1711, an administration server side information management section 1712, and an administration server side driver storage section 1713. The administration server side information management section 1712 constitutes a data recording section, i.e., database, which is reserved on the administration server side storage section 1500 such as HDD or the like.

The administration server side driver control section 1711 generates a task (hereinafter referred to as "driver task") such as printer addition or driver update. In this embodiment, the administration server side driver control section 1711 on the administration server side device management application section 1710 controls the administration server side information management section 1712 and the administration server side driver storage section 1713.

The administration server side driver storage section 1713 forms a virtual directory section using a protocol, such as FTP or HTTP, that is reserved on the administration server side storage section 1500. In addition, the administration server side driver storage section 1713 functions as a server, such as a FTP server, HTTP server, or file server, and stores a print driver.

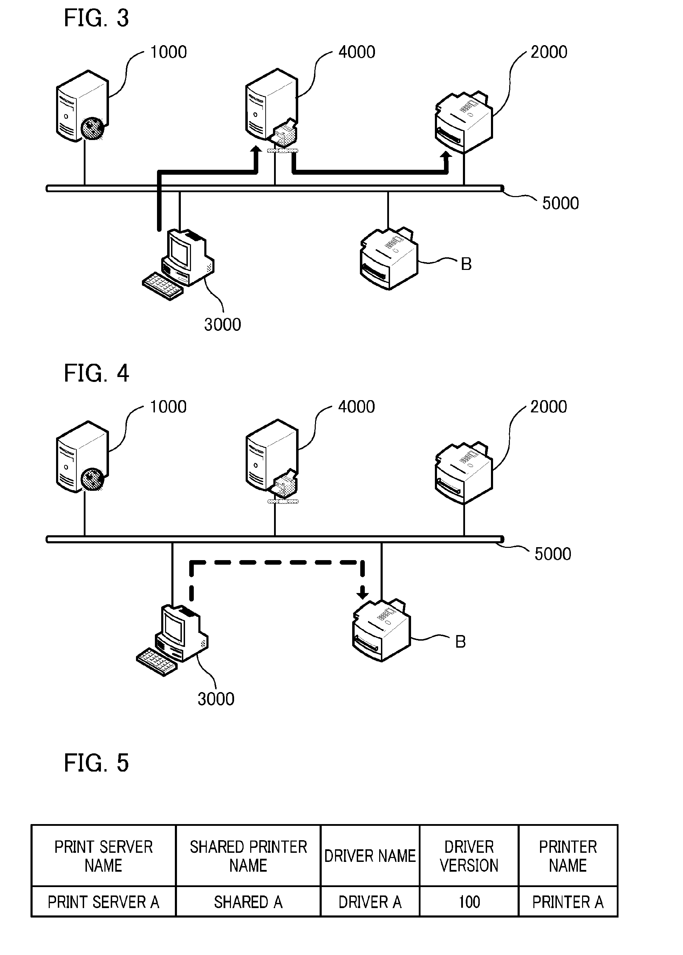

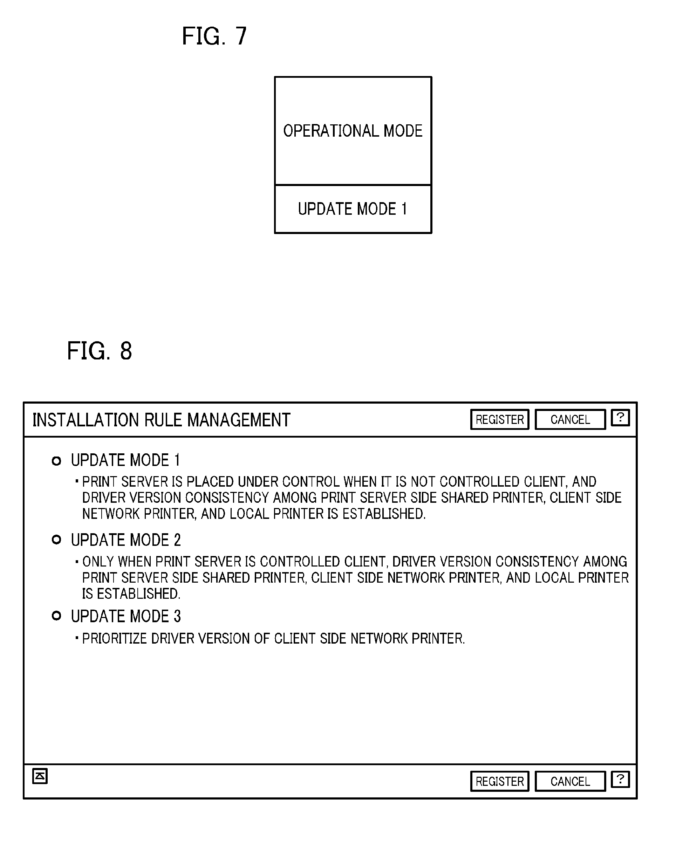

The administration server side information management section 1712 constitutes a database. The administration server side information management section 1712 functions as a unit for managing UI setup information (see Fig. 8) provided by the administration server side driver control section 1711 and print driver information stored in the administration server side driver storage section 1713 in addition to a table (see Fig. 5). The administration server side driver control section 1711 executes a driver task for a client side driver management service section 3710 and a print server side driver management service section 4710 to be described below. The administration server side driver control section 1711 and the administration server side driver storage section 1713 may be provided in a server that is separated from the administration server 1000.

(Network Pinter) The network printer 2000 executes various processing operations by a network printer side central processing unit 2800. A network printer side data control section 2700 is NVRAM and the like, and loads a system program, an application program, and relevant data that have been read via a network printer side recording medium reading control section 2600.

A network printer side storage section 2500 stores data used by a program on the network printer side data control section 2700. The system program and the application program processes information that has been input from the user interface (not shown) on a network printer side display section 2100. In addition, the system program and the application program perform input and output of data via a network printer interface control section 2400.

The network printer 2000 performs printing processing via a device interface control section 2850 and a printer engine section 2900. The network printer 2000 may be a single function peripheral (SFP) printer having only a print function, or a composite machine (multi function peripheral (MFP)) having a scanner function, copying function, fax function, besides a print function.

The network printer 2000 holds device information such as MIB. Acquiring print information and print settings is performed by an administrator from the administration server 1000 via the network. Each of the client side driver management service section 3710 and the print server side driver management service section 4710 consists of an agent service program having a driver installation function. The agent service program communicates with the driver control section 1711 using a Web service that employs a protocol such as SOAP (Simple Object Access Protocol).

(Client) As in the administration server 1000, the client 3000 executes various processing operations by a client side central processing unit 3800.

The client side data control section 3700 is NVRAM and the like, and loads a system program, an application program, and relevant data that have been read from a client side recording medium reading control section 3600.

A client side storage section 3500 stores data used by a program on a client side data control section 3700. The client side storage section 3500 consists of a recording medium such as a memory, a HDD (hard disk), and an optical magnetic disk, or consists of a device combined with these units.

The system program and the application program process information that has been input from the user interface (not shown) on a client side display section 3100. In addition, the system program and the application program process information that has been input from a client side input section 3200. Furthermore, the system program and the application program perform input and output of data via a client side interface control section 3400.

To the client 3000, a display device such as CRT display, liquid crystal display, or the like is connected as the client side display section 3100, and a pointing device such as keyboard, mouse, and the like is connected as the client side input section 3200. The client side driver management service section 3710 operates on the client side data control section 3700 such as NVRAM.

A client side driver management service section 3710 is an agent service program having a driver installation function. The agent service program communicates with the driver control section 1711 of the administration server 1000 using a Web service that employs a protocol such as SOAP. The agent service has a function of installing the print driver by acquiring the print driver stored in the administration server side driver storage section 1713 through communication with the administration server side driver control section 1711.

(Print Server) As in the administration server 1000, the print server 4000 executes various processing operations by a central processing unit 4800.

A print server side data control section 4700 is NVRAM and the like, and loads a system program, an application program, and relevant data that have been read from a print server side recording medium reading control section 4600.

A print server side storage section 4500 stores data used by a program on the print server side data control section 4700. The print server side storage section 4500 consists of a recording medium such as a memory, a HDD (hard disk), and an optical magnetic disk, or consists of a device combined with these units.

The system program and the application program process information that has been input from the user interface (not shown) on a print server side display section 4100. In addition, the system program and the application program perform input and output of data via a print server side interface control section 4400.

To the print server 4000, a display device such as CRT display, liquid crystal display, or the like is connected as the print server side display section 4100, and a pointing device such as keyboard, mouse, and the like is connected as a print server side input section 4200.
The print server side driver management service section 4710 operates on the print server side data control section 4700 such as NVRAM. The print server side driver management service section 4710 also consists of an agent service program having a print driver installation function, and communicates with the driver control section 1711 using a Web service that employs a protocol such as SOAP.

Fig. 3 shows a print path in network printing of the information processing apparatus according to this embodiment. Fig. 4 shows a print path of information processing apparatus when a local printer is used.

As shown by the solid line in Fig. 3, when using only network printing, printing data is transmitted from the client 3000 to the network printer 2000 via the network. As shown in Fig. 4, when printing is made on the local printer B from the client 3000, printing data is directly transmitted from the client 3000 to a printer 2001 as shown by the dotted line in Fig. 4.

In this way, both network printing and printing using the local printer B becomes possible by connecting the local printer B with the communication line 5000, in this embodiment. Since the network printer 2000 prints via a print server 4000, rendering processing and spooling in the printing mode <EMF> is performed on the side of the print server 4000. Furthermore, since the printer property of the print driver is prioritized on the administration server 1000, there may be cases in which normal printing or print setting cannot be carried out.

Hence, in this embodiment, the print driver version of the local printer B is compared with that of the network printer 2000. In this embodiment, when the version of the local printer B is higher than that of the network printer 2000, the print driver of the local printer B is installed on the print server 4000 for setting a shared printer. In this embodiment, the print driver version of the shared printer, the driver version of the network printer 2000, and the identity of the local printer B are maintained. Hereinafter, update processing of the print driver will be described in detail.

(Print Driver before Update) First, the description will be made of the state before the update of the print driver in this embodiment.

Fig. 5 shows the database table that is stored in the administration server side information management section 1712. As shown in Fig. 5, for the print server 4000, a printer name <printer A>, which is supported by a print driver having a driver name of <driver A> and a version of <100>, is set. The printer A is a shared printer having the shared name <shared A>.

The administration server side driver control section 1711 is not managing the print server 4000 yet, and hence the management data shown in Fig. 5 is not yet maintained. For the print server 4000, the application (hereinafter referred to as "agent service application") that communicates with the administration server side driver control section 1711 is not yet installed. The print server side driver management service section 4710 is not yet generated.

On the side of the client 3000, the network printer 2000 having the printer name of <printer A> corresponding to the shared printer having the shared name of <shared A> is installed on the client 3000 using the Point and Print function. To the client 3000, the client side driver management service section 3710, which is an agent service for communicating with the administration server side driver control section 1711, is not generated.

The print driver used for the shared printer for the print server 4000 and the print driver of the network printer 2000 for the client 3000 are both the same kind and the same version, and are mutually consistent.

Under this premise, it is intended that the administration server side driver control section 1711 installs the print driver of the local printer B from a print driver disk in the client 3000.

Also, in the case of a version upgrade of the print driver, the print driver version of the local printer B is intended to be a newer version than that of the print driver version of the network printer 2000.

For example, it is intended that the driver name of the print driver of the network printer 2000 before version upgrade is <driver A> and its version is <100>, and the printer name of the local printer B is <printer A> and its version is <200>.

Here, each printer name may be the same as or different from the network printer 2000. The driver task is not the addition of a printer, but may be the update of print driver. In other words, the driver task is intended to include processing for updating a driver used in the network printer 2000 in the client 3000.

(Print Driver Update Processing) When the print driver is updated, the following processing is executed.
(1) Process 1 of the administration server 1000
(2) Process 1 of the client 3000
(3) Process 2 of the administration server 1000
(4) Process 1 of the print server 4000
(5) Process 3 of the administration server 1000
(6) Process 2 of the print server 4000
(7) Process 4 of the administration server 1000
(8) Process 2 of the client 3000
(9) Process 5 of the administration server 1000
(10) Process 3 of the client 3000
(11) Process 6 of the administration server 1000

(1) Process 1 of the administration server 1000

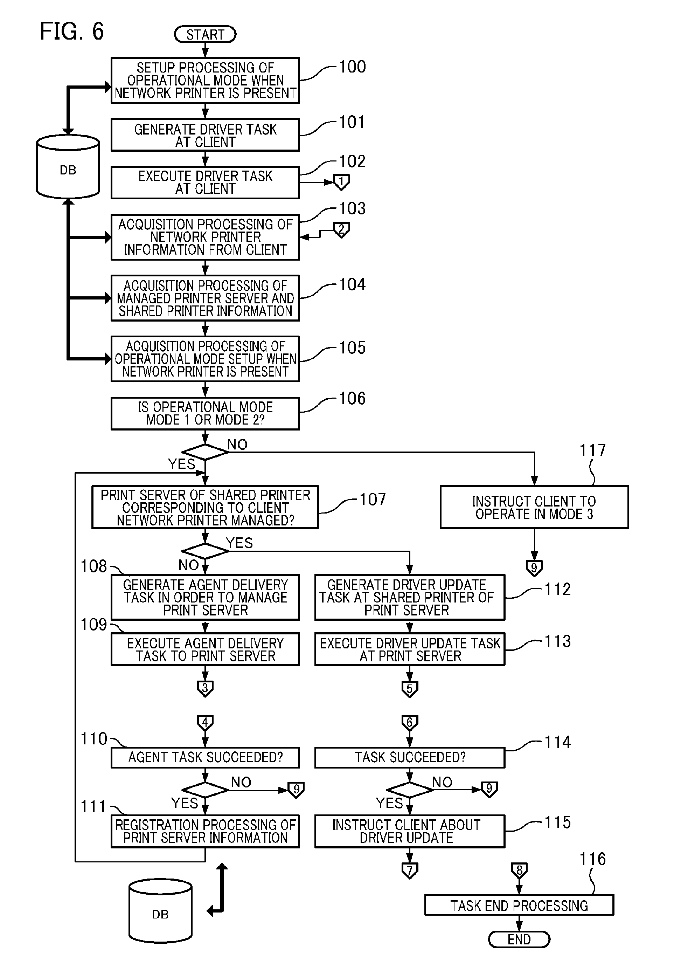

Fig. 6 is a flowchart illustrating the operations of the administration server side driver control section 1711 and the program contents.

First, during execution of the driver task in the client 3000, the administration server side driver control section 1711 selects the operational mode when the network printer 2000 is present in the client 3000. The administration server side driver control section 1711 stores the selected operational mode in the administration server side information management section 1712 (Fig. 6, step 100). In this case, <update mode 1> is intended to be selected as the operational mode as shown in Fig. 7.

First, the administration server side driver control section 1711 generates the driver task for installing the print driver in the client 3000 (Fig. 6, step 101).

As used herein, the term "to generate the driver task" means to select the client 3000 in which a print driver is to be installed, the local printer B to be added to the client 3000, and a print driver to be updated.

In this embodiment, it is intended that the driver name of the print driver to be installed on the local printer B is <driver A> and its version is <200>, and the printer name of the network printer 2000 for the client 3000 is <printer A>.

Next, the administration server side driver control section 1711 executes the driver task in the client side driver management service section 3710 for the client 3000 consisting of an agent service program. Also, the administration server side driver control section 1711 selects the client 3000 to which a print driver is to be installed, the local printer B to be added to the client 3000, and a print driver to be updated (Fig. 6, step 102).

As shown in Fig. 8, there are three operational modes: update mode 1, update mode 2, and update mode 3.

(Update Mode 1)

Update mode 1 brings the print server 4000 under the control of the administration server when the print server 4000 is not under the control of the administration server 1000. This mode is to ensure the integrity of the print driver used for the shared printer for the print server 4000, the network printer 2000 for the client 3000, and the local printer B.

As used herein, the term "to bring the print server 4000 under the control of the administration server 1000" specifically refers to bringing the print server 4000 under the control of the administration server side driver control section 1711. More specifically, the term "to bring the print server 4000 under the control of the administration server side driver control section 1711" refers to the following: an agent service program is installed on the print server 4000 to thereby constitute the print server side driver management service section 4710, and then, as shown in Fig. 5, shared printer information on the print server 4000 is managed by the administration server side information management section 1712.

(Update Mode 2)

Update mode 2 is executed when the print server 4000 is under the control of the administration server side driver control section 1711. The update mode 2 ensures the integrity of the print driver used for the shared printer for the print server 4000, the network printer 2000 for the client 3000, and the local printer B. As used herein, the term "to ensure the integrity of the print driver" refers to ensuring the identity of the kind and version of the print driver so as to make each print driver operate normally.

(Update Mode 3)

Update mode 3 is a mode for prioritizing the print driver version of the network printer 2000 for the client 3000 regardless of whether or not the print server 4000 is brought under the control of the administration server side driver control section 1711.

(2) Process 1 of the client 3000

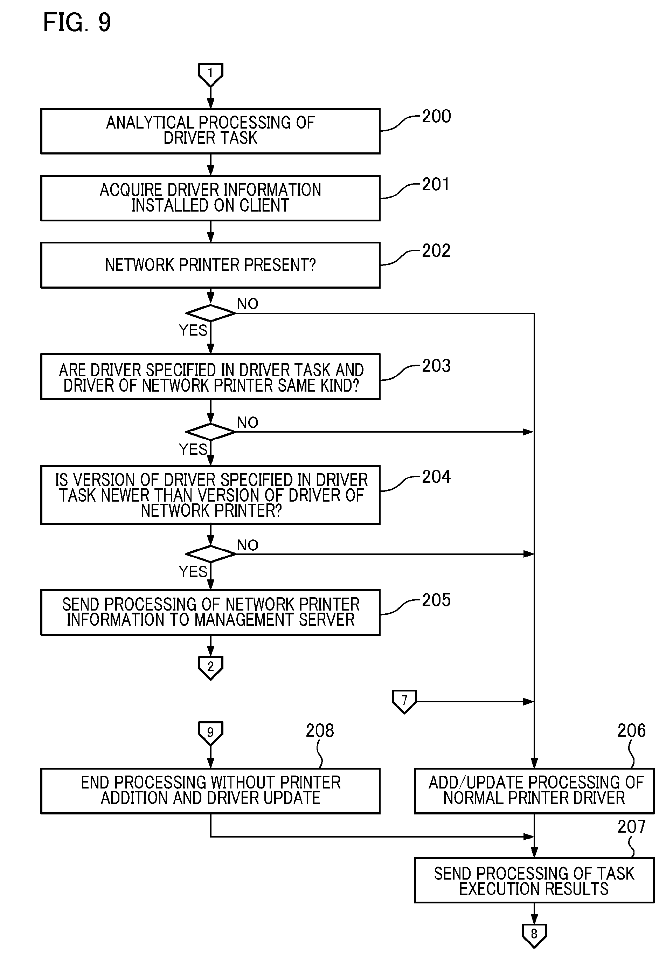

Fig. 9 shows a client processing flow illustrating the operation of the client side driver management service section 3710 (agent service) and the program contents.

First, the client side driver management service section 3710, which is an agent service for the client 3000, receives a driver task and analyzes the contents of this task(Fig. 9, step 200).

Analysis of the task contents refers to determining which printer and which print driver are to be added in the case of adding a printer. Analysis of the task contents refers to determining which version and which print driver are updated by which kind of driver.

Print driver determination involves driver information (attribute) such as the version, language, and direction of the print driver. Acquisition source information of the driver set is included when performing the print driver determination. In this embodiment, according to the acquisition source information, the driver set is acquired from the administration server side driver storage section 1713 as the acquisition source.

The client side driver management service section 3710 acquires driver information including the type and version of the print driver from the installation program when the print driver of the local printer is installed.

Next, the client side driver management service section 3710 switches to a driver information acquisition unit to acquire driver information from the print driver that has already been installed on the client 3000 (Fig. 9, step 201). Driver information includes information categorized as either information about the network printer 2000 or information about the local printer B other than the aforementioned driver information.

In addition, in the case of the network printer 2000, the client side driver management service section 3710 acquires print server information of the shared printer corresponding to a network printer 2100. Such information is registered in a storage area such as the registry for the client 3000, and is, as is known in the art, acquired either by searching the registry or by using an API provided by an operating system.

Next, the client side driver management service section 3710, which is an agent service program, determines whether or not the network printer 2100 is present on the client 3000 (Fig. 9, step 202). If YES, the process advances to step 203.

Next, the client side driver management service section 3710 switches to a determination unit configured to determine the kind of driver. Then, in order to set the print driver and the network printer 2000 that have been selected by the driver task, the determination unit determines whether or not the print driver is the same kind as the pre-installed print driver (Fig. 9, step 203). If YES, the process advances to step 204.

Next, the client side driver management service section 3710 compares the version of the print drivers, and switches to a determination unit configured to determine the identity. The client side driver management service section 3710 compares the version of the print driver that has been selected by the driver task with the version of the print driver that has been installed as the network printer 2000 (Fig. 9, step 204).

The client side driver management service section 3710 proceeds from step 204 to step 205, when the version of the print driver specified by the driver task is higher than that of the print driver of the network printer 2000 (when newer, in other words, if YES) as a result of determination in step 204. When the version is old, in other words, if NO, the process advances to step 206.

Next, the client side driver management service section 3710 sends the network printer information that has been acquired in step 201 to the administration server side driver control section 1711 (Fig. 9, step 205).

In this embodiment, the print driver A corresponding to the shared printer having the version <100> and the shared name <shared A> beforehand is installed on the client 3000 so as to set the network printer 2000.

(3) Process 2 of the administration server 1000

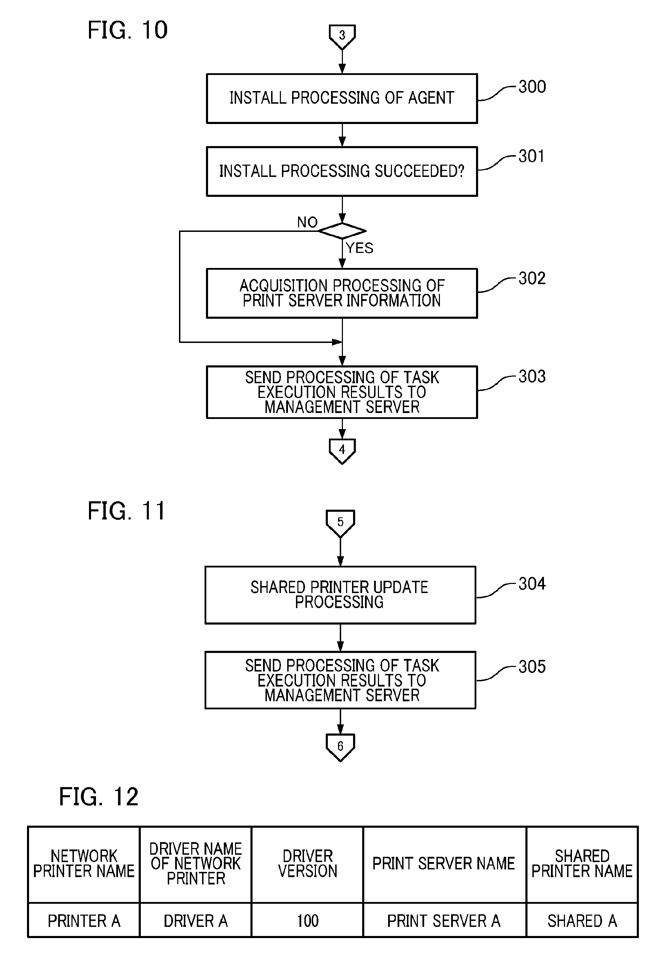

As shown in Fig. 6, the administration server side driver control section 1711 receives network printer information from the client side driver management service section 3710, and stores it on the administration server side information management section 1712 (Fig. 6, step 103). In this embodiment, the print driver A is pre-installed on the client 3000, and its version is (v100), as shown in Fig. 12.

The administration server side driver control section 1711 accesses the administration server side information management section 1712, and acquires information of the print server 4000 and its shared printer that are managed therein (Fig. 6, step 104). An example of this information is shown in Fig. 5. As described above in this embodiment, there is no print server information under the control of the administration server side driver control section 1711 at that time.

Next, the administration server side driver control section 1711 accesses the administration server side information management section 1712, and acquires the operational mode setting information of the administration source that has been set in step 100 (Fig. 6, step 105). The operational mode setting is an example of setting the installation operation of the administration server. In other words, depending on the setting of either the operational mode 1 or the operational mode 2, the administration server side driver control section 1711 thereafter controls the driver transfer processing performed by the administration server.

Here, it is assumed that the operational mode in the operational mode setting information is <update mode 1>.

Next, the administration server side driver control section 1711 determines whether the operational mode is the update mode 1 or the update mode 2 (Fig. 6, step 106). If YES, the process advances to step 107.

Next, the administration server side driver control section 1711 compares the network printer information that has been acquired in step 103 with the print server 4000 and its shared printer information that has been acquired in step 104 (Fig. 6, step 107).

Comparison in step 107 refers to determining whether or not the administration server side driver control section 1711 manages the print server 4000 on which the shared printer corresponding to the network printer 2000 for the client 3000 is installed. In step 107, if the determination result is NO, the process advances to step 108.

Next, the administration server side driver control section 1711 generates a task for distributing an agent service to the print server 4000 in order to place the print server 4000 under the control of the administration server side driver control section 1711 (Fig. 6, step 108).

Next, the administration server side driver control section 1711 executes an agent task to the print server 4000 (Fig. 6, step 109). For installation of an agent service to the print server 4000, for example, a remote distribution technique such as WMI, which is incorporated in the OS of Microsoft (TM) Corp. is utilized.

(4) Process 1 of the print server 4000

Fig. 10 is a print server processing flow illustrating the operation of the print server side driver management service section 4710 and the program contents.

The print server side data control section 4700 performs installation processing of an agent service program in response to agent task processing from the administration server side driver control section 1711.
The agent service program constitutes the print server side driver management service section 4710 (Fig. 10, step 300).

Next, the print server side data control section 4700 determines whether or not the installation processing of the print server side driver management service section 4710 has been completed successfully (Fig. 10, step 301). If YES, the process advances to step 302.

Next, the print server side driver management service section 4710 acquires print server information that indicates whether the shared printer has already been installed on the print server 4000 (Fig. 10, step 302).

Next, the print server side driver management service section 4710 returns the information that has been acquired in steps 301 and 302 to the administration server side driver control section 1711 (Fig. 10, step 303).

(5) Process 3 of the administration server 1000

As shown in Fig. 6, the administration server side driver control section 1711 determines from agent task result obtained from the print server side driver management service section 4710 for the print server 4000 whether or not the agent task has been completed successfully (Fig. 6, step 110). If YES, the process advances to step 111.

Next, the administration server side driver control section 1711 registers the print server information obtained from the print server side driver management service section 4710 on the administration server side information management section 1712 (Fig. 6, step 111).

In this embodiment, the print server name <print server A> information shown in Fig. 5 is assumed to be registered.

Next, the administration server side driver control section 1711 performs determination processing in step 107 again (Fig. 6, step 107). If YES, the process advances to step 112.

Next, the administration server side driver control section 1711 generates a driver update task for the shared printer located on the print server 4000 (Fig. 6, step 112).

The driver update task refers to generating a task for updating the print driver A on which the shared name of the print server 4000 is <shared A> from version <100> to version <200>.

Next, the administration server side driver control section 1711 executes the generated driver task at the print server side driver management service section 4710 (Fig. 6, step 113). Consequently, the administration server side driver control section 1711 functions as a driver installation unit together with the print server side driver management service section 4710.

(6) Process 2 of the print server 4000

Fig. 11 is a print server processing flow illustrating the agent service operation of the print server side driver management service section 4710 and the program contents.

The print server side driver management service section 4710 updates the print driver used for the shared printer A as a driver installation unit. In other words, the version of the print driver that is pre-installed on the print server is updated from <100> to <200> (Fig. 11, step 304).

The print server side driver management service section 4710 returns the task results back to the administration server side driver control section 1711 (Fig. 11, step 305).

(7) Process 4 of the administration server 1000

As shown in Fig. 6, the administration server side driver control section 1711 determines whether or not the driver task in step 113 has been completed successfully (Fig. 6, step 114). If YES, the process advances to step 115.

Next, the administration server side driver control section 1711 directs driver task processing involving an update of the network printer 2000 to the client side driver management service section 3710 (Fig. 6, step 115).

(8) Process 2 of the client 3000

As shown in Fig. 9, the client side driver management service section 3710 executes installation processing of the local printer B involving a print driver update of the network printer 2000 (Fig. 9, step 206).

With this arrangement, the same kind and the same latest version of print driver is installed on the shared printer for the print server 4000, the network printer 2000 for the client 3000, and the local printer B. Consequently, the integrity, e.g., of identity, of network printer, shared printer, and local printer is realized.

Next, the client side driver management service section 3710 returns the driver task results back to the administration server side driver control section 1711 (Fig. 9, step 207).

(9) Process 5 of the administration server 1000

As shown in Fig. 6, the administration server side driver control section 1711 receives the task results from the client side driver management service section 3710 to thereby perform task ending processing (Fig. 6, step 116).

The term "task ending processing", as used herein, means to notify an IT administrator whether the task has completed either successfully or in failure via the administration server side display section 1100 or the like.

On the other hand, when task processing of an agent service to the print server 4000 has failed in step 110, or when a printer task for the print server 4000 has failed in step 114, the process advances to step 208 shown in Fig. 9.

(10) Process 3 of the client 3000

As shown in Fig. 9, the client side driver management service section 3710 terminates driver task processing (Fig. 9, step 208), and the process advances to step 207. In other words, the client side driver management service section 3710 cancels the driver task on the client 3000.

Next, a description will be given in the case where <update mode 2> has been selected as the operational mode in step 100.

In this case, it is assumed that the administration server side driver control section 1711 brings the print server 4000 for the shared printer corresponding to the network printer 2000 for the client 3000 under its control, and has already registered information shown in Fig. 5 in the table.

(11) Process 6 of the administration server 1000

In step 107 shown in Fig. 6, since the administration server side driver control section 1711 brings the print server 4000 for the shared printer corresponding to the network printer 2000 for the client 3000 under its control, it is determined as YES.

The subsequent processing is the same processing flow as from step 112 to step 116 in Fig. 6, from step 206 to step 208 in Fig. 9, and from step 304 to step 305 in Fig. 11 described above.

A description will be given for the case where <update mode 3> has been selected as the operational mode in step 100.

In this case, the determination of whether the operational mode is update mode 1 or update mode 2 by the administration server side driver control section 1711 is determined as NO in step 106.

Next, the administration server side driver control section 1711 provides instructions on which version of the printer driver of the network printer 2000 with the update mode 3 is prioritized to the client side driver management service section 3710 (Fig. 6, step 117). In other words, this processing is the same processing flow as from step 208 to step 207 in Fig. 9 and step 116 in Fig. 6.

On the other hand, when the client side driver management service section 3710 has determined in step 202 that the network printer 2000 is not present in the client 3000, it is determined as NO, and steps 206 and 207 are performed.

When the client side driver management service section 3710 has determined in step 203 that the print driver specified in the driver task and the print driver of the network printer 2000 are not the same kind, steps 206 and 207 are performed.

When the client side driver management service section 3710 has determined in step 204 that the driver version specified by the driver task is earlier than that of the network printer 2000, steps 206 and 207 are performed.

As explained in the foregoing, according to this embodiment, a printing environment where each printer normally operates can be maintained when a driver update occurs, whereby the convenience of user's maintenance and management can be improved.

It goes without saying that various modifications can be made to the present invention and the present invention covers such modified invention. For example, in the above-described embodiment, although the present invention is applied to the case of a print driver update, the present invention can also be applied to another device that requires maintaining the identity of the network device's driver and the local device's driver. Also, in the above embodiment, the administration server has executed a driver task for determining the kind and identity of a driver to be installed on a client, and executed a driver update task to a print server. However, the present invention is not limited thereto. A task may be executed by a single server or client or may be executed by a plurality of servers and clients having a configuration different from the foregoing embodiment. Other Embodiments

Aspects of the present invention can also be realized by a computer of a system or apparatus (or devices such as a CPU or MPU) that reads out and executes a program recorded on a memory device to perform the functions of the above-described embodiments, and by a method, the steps of which are performed by a computer of a system or apparatus by, for example, reading out and executing a program recorded on a memory device to perform the functions of the above-described embodiments. For this purpose, the program is provided to the computer for example via a network or from a recording medium of various types serving as the memory device (e.g., computer-readable medium).

A further embodiment of the present invention provides a computer-readable recording medium that stores a computer program which causes a computer to function as an information processing apparatus for transferring a network device driver to a control server, the apparatus comprising determination means configured to determine whether or not a driver of a local device connected locally to a client apparatus is the same kind as the network device driver connected to the client apparatus via a network and to determine which of a version of the network drive driver and a version of the local device driver is newer; and transfer means configured to transfer the local device driver to the control server as the network device driver in the case that the determination means determines that the local device driver is the same kind as the network device driver and the local device driver is newer than the network device driver.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing apparatus for transferring a network device driver to a control server (4000), comprising:
determination means (3710) configured to determine whether or not a driver of a local device connected locally to a client apparatus (3000) is the same kind as the network device driver connected to the client apparatus (3000) via a network and to determine which of a version of the network device driver and a version of the local device driver is newer; and
transfer means (3710) configured to transfer the local device driver to the control server (4000) as the network device driver in the case that the determination means (3710) determines that the local device driver is the same kind as the network device driver and the local device driver is newer than the network device driver.

2. The information processing apparatus according to claim 1, wherein the local device driver is not installed to the control server (4000) in the case that the determination means (3710) determines that the local device driver is a different kind from the network device driver or the version of the local device driver is older than that of the network device driver.

3. The information processing apparatus according to claim 1 or claim 2, wherein the determination means (3710) is configured to determine whether or not the control server (4000) is under control, and the control server is placed under the control of the determination means in the case that the control server is determined not to be under control, and the transfer means (3710) is configured to transfer the local device driver to the control server (4000) after the control server is placed under the control of the determination means (3710).

4. The information processing apparatus according to claim 1 or claim 2, wherein the determination means is configured to determine whether or not the control server (4000) is under control, and the transfer means (3710) is configured to transfer the local device driver to the control server (4000) in the case that the control server is determined to be under control.

5. The information processing apparatus according to any preceding claim, further comprising generation means (1711) for generating a task for updating the control server driver, and execution means (1711) for executing the task at the control server for installation of the driver.

6. The information processing apparatus according to claim 5, wherein the generation means (1711) is configured to generate a task including determining the kind and version of the driver to be installed, and the execution means (1711) is further configured to execute the task at the client for the determination of the kind and version of the driver.

7. The information processing apparatus according to claim 1, further comprising:
setting means (1711) configured to set the installation operation of the information processing apparatus,
wherein the information processing apparatus is configured to perform determination processing by the determination means (3710) and transfer processing by the transfer means (3710) depending on the setting by the setting means (1711).

8. A computer program which, when run on a device, causes the device to function as an information processing device according to any one of claims 1 to 7.

9. An information processing method for transferring a network device driver to a control server, comprising:
a determination step (S203, S204) of determining whether or not a driver of a local device connected locally to a client apparatus is the same kind as the network device driver connected to the client apparatus via a network and determining which of a version of the network device driver and a version of the local device driver is newer; and
a transfer step (S206) of transferring the local device driver to the control server as the network device driver in the case that the determination step determines that the local device driver is the same kind as the network device driver and the local device driver is newer than the network device driver.

10. The information processing method according to claim 9, wherein the local device driver is not transferred to the control server in the case that it is determined in the determination step that the local device driver is a different kind from the network device driver or the version of the local device driver is older than that of the network device driver.

11. The information processing method according to claim 9 or claim 10, wherein it is determined in the determination step (S107) whether or not the control server is under control, and the control server is placed (S109) under control in the determination step in the case that it is determined that the control server is not under control, and the local device driver is transferred to the control server in the transfer step (S206)_after the control server is placed under control.

12. The information processing method according to claim 9 or claim 10, wherein it is determined (S107) in the determination step whether or not the control server is under control, and the local device driver is transferred to the control server in the transfer step (S206) in the case that the control server is determined to be under control.

13. The information processing method according to any one of claims 9 to 12, further comprising a generation step (S112) of generating a task for updating the control server driver, and an execution step (S113) of executing the task at the control server for installation of the driver.

14. The information processing method according to claim 13, wherein the generation step (S112) further comprises generating a task including determining the kind and version of the driver to be installed and the execution step (S113) further comprises executing the task at the client apparatus for determination of the kind and version of the driver.

15. The information processing method according to any one of claims 9 to 14, further comprising:
a setting step (S100) of setting the installation operation of the information processing apparatus,
wherein the information processing method performs determination processing in the determination step and transfer processing in the transfer step depending on the setting in the setting step.
